# EUROPÄISCHE PATENTSCHRIFT

(11) **EP 0 952 030 B1**
(45) Veröffentlichungstag und Bekanntmachung des Hinweises auf die Patenterteilung: **08.04.2009**
(21) Anmeldenummer: 99107585.4
(22) Anmeldetag: 15.04.1999
(51) Int. Cl.: B60L 9/28

(54) **Elektrische Schaltungsanordnung zum Versorgen eines elektrischen Antriebssystems**
Electric supply circuit for an electric drive system
Circuit électrique d'alimentation pour un système d'entraînement électrique

(30) Priorität: 21.04.1998 DE 19817752
(43) Veröffentlichungstag der Anmeldung: 27.10.1999
(73) Patentinhaber: SIEMENS AKTIENGESELLSCHAFT, 80333 München (DE)
(72) Erfinder: Laska, Bernd, Dr., 91074 Herzogenaurach (DE); Fetter, Wolfgang, 91052 Erlangen (DE); Brauer, Michael, 91056 Erlangen (DE); Glinka, Martin, 91080 Spardorf (DE); Gumbrecht, Stefan, 91074 Herzogenaurach (DE)

(56) Entgegenhaltungen:
- EP-A- 0 820 893
- DE-A- 19 614 627
- ÖSTLUND S: "INFLUENCE OF THE CONTROL PRINCIPLE ON A HIGH-VOLTAGE INVERTER SYSTEM FOR REDUCTION OF TRACTION-TRANSFORMER WEIGHT" PROCEEDINGS OF THE EUROPEAN CONFERENCE ON POWER ELECTRONICS AND APPLICATIONS. (EPE). AACHEN, 9 - 12 OCTOBER, 1989, DUSSELDORF, EPE SECRETARIAT, DE, Bd. 2 CONF. 3, 1. Oktober 1989 (1989-10-01), Seiten 561-566, XP002075383
- R. WAGNER: "Technologische Perspektiven für Fahrzeuge im spurgeführten Hochgeschwindigkeitsverkehr" ZEV+DET GLAS ANN., Bd. 121, Nr. 2/3, Februar 1997 (1997-02) - März 1997 (1997-03), Seiten 64-80, XP001023900
- WESCHTA A: "DIE ELEKTRISCHE AUSRUESTUNG DER SCHNELLVERKEHRSTRIEBSUEGE ICE 2.2 UND ICT DER DEUTSCHEN BAHN AG" ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 119, Nr. 9/10, 1. September 1995 (1995-09-01), Seiten 425-435, XP000542113 ISSN: 0941-0589

## Beschreibung

Die Erfindung bezieht sich auf eine elektrische Schaltungsanordnung zum Versorgen eines elektrischen Antriebssystems, insbesondere eines elektrischen Antriebssystems eines schienengebundenen Triebfahrzeugs, das eine Mehrzahl von Antriebsgruppen umfaßt, die jeweils mindestens einen Antriebsmotor enthalten.

Bei der Entwicklung von Triebfahrzeugen für den spurgeführten Hochgeschwindigkeitsverkehr ist eines der Entwicklungsziele, die Gewichte aller Komponenten zu verringern. Eine nicht unwesentliche Gewichtskomponente stellen die im Stand der Technik für das Antriebssystem zur Potentialtrennung erforderlichen Hochspannungstransformatoren dar. Bei dem beispielsweise aus der Zeitschrift "ZEV + DET Glasers Annalen 119", Nr. 9/10, 1995, Seite 425-435, bekannten elektrischen Antriebskonzept wird ein Transformator unmittelbar über einen Stromabnehmer mit der Fahrdrahtspannung versorgt. Bei der Fahrdrahtspannung handelt es sich um eine niederfrequente Hochspannung von 15 kV mit einer Frequenz von 16 2/3 Hz. Zwei sekundärseitige Traktionswicklungen pro Drehgestell stellen die Eingangsspannung für zwei Eingangsstrom- oder Eingangsumrichter zur Verfügung, die als Vierquadrantensteller (4 QS) ausgeführt sind, um im Bremsbetrieb die von den Fahrmotoren generatorisch erzeugte Energie in das Fahrleitungsnetz zurückspeisen zu können. Zwei voneinander unabhängige Pulswechselrichter speisen aus einem Zwischenkreis je einen Fahrmotor mit variabler Spannung und Frequenz. Problematisch an dieser Schaltungsanordnung ist in erster Linie das hohe Gewicht und der schlechte Wirkungsgrad des Hochspannungstransformators. In der Praxis wird daher versucht, das Gewicht des Hochspannungstransformators so klein wie möglich zu machen. Damit geht aber eine Verschlechterung seines Wirkungsgrades einher, so daß stets eine unbefriedigende Optimierung zwischen Gewicht und Wirkungsgrad stattfinden muß.

Dieses Problem ist beispielsweise aus "ZEV + DET Glasers Annalen 121", Nr. 2/3, 1997, Seite 64 -80, im Zusammenhang mit der Bordnetzversorgung eines schienengebundenen Fahrzeuges bekannt. Dort ist auf Seite 5 in Bild 5 ein Energieversorgungsblock für die Hilfsbetriebe beim ICE 2 dargestellt, bei der anstelle des in der Vorgängerversion (ICE 1) zur Potentialtrennung zwischen der 1000 V-Zugsammelschiene und den Hilfsbetrieben verwendeten 16 2/3 Hz-Transformators eine Mehrzahl von in Reihe geschalteten Umrichtermodulen verwendet werden, die direkt an die 1000 V-Zugsammelschiene angeschlossen sind. In diesen Umrichtermodulen wird eine Frequenz von 20 kHz erzeugt, die dem am Ausgang zur Potentialtrennung angeordneten Transformator zugeführt wird. Vier ausgangsseitig parallel geschaltete Transformatoren speisen dann jeweils über einen Gleichrichter ein 600 V-Gleichspannungsnetz. Dadurch ist eine gleichmäßige Belastung aller Umrichterstufen gewährleistet. Durch diese Maßnahme konnte die Masse des Transformators von 713 kg auf 4 x 19 kg gesenkt werden.

Dieses bekannte Konzept läßt sich jedoch nicht auf Verbraucher übertragen, die unabhängig, d. h. elektrisch entkoppelt voneinander betrieben werden müssen, wie dies beispielsweise bei den zu verschiedenen Achsen gehörenden Antriebsmotoren der Fall ist. Der Leistungsbedarf der pro Achse vorhandenen Antriebsmotoren hängt beispielsweise vom Zustand des Schienenbereichs ab, auf dem sich die Räder der jeweiligen Achse gerade befinden. Je nach Zustand des Systems Rad/Schiene kann auch im normalen Fahrbetrieb der Leistungsbedarf der zu verschiedenen Achsen gehörenden Antriebsmotoren erhebliche und zeitlich variierende Unterschiede aufweisen, die im Extremfall zwischen Vollast und Leerlauf liegen können. Um zu verhindern, daß diese Belastungsänderungen direkt an den Eingangskreis weitergegeben werden, wäre somit beim bekannten Konzept der Einsatz von Energiespeichern auf der Sekundärseite des Hochfrequenztransformators erforderlich. Dadurch wäre aber die bei den Transformatoren erzielte Gewichtsersparnis zumindest zum Teil zunichte gemacht.

Andere elektrische Schaltungsanordnungen zum Versorgen elektrischer Antriebssysteme sind aus der EP 0 820 893 A2 und aus der DE 196 14 627 A1 bekannt.

Der Erfindung liegt nun die Aufgabe zugrunde, eine elektrische Schaltungsanordnung zum Versorgen eines elektrischen Antriebssystem, insbesondere eines elektrischen Antriebssystem eines schienengebundenen Triebfahrzeugs, anzugeben, die hinsichtlich ihres Wirkungsgrades und ihres Gewichts gegenüber den bekannten Schaltungsanordnungen verbessert ist.

Die genannte Aufgabe wird gemäß der Erfindung gelöst mit einer elektrischen Schaltungsanordnung mit den Merkmalen des Patentanspruches 1. Vorteilhafte Ausführungsformen der Erfindung sind Gegenstand der abhängigen Ansprüche 2-22. Die elektrische Schaltungsanordnung zum Versorgen eines elektrischen Antriebssystems, insbesondere eines elektrischen Antriebssystems eines schienengebundenen Triebfahrzeugs, umfaßt eine Mehrzahl von Antriebsgruppen, von denen jede zumindest einen Antriebsmotor und eine Eingangsumrichtergruppe enthält. Die Eingangsumrichtergruppen sind elektrisch in Reihe zueinander an ein Versorgungsnetz angeschlossen. Jeder Eingangsumrichtergruppe ist eine Transformatorgruppe zugeordnet, die mit ihrer Sekundärseite über einen Antriebsumrichter den Antriebsmotor der Antriebsgruppe speist, wobei eine Ausgleichsschaltung vorgesehen ist, die zum Herbeiführen einer gleichmäßigen Lastaufteilung auf die Eingangsumrichtergruppen die Antriebsumrichter eingangsseitig elektrisch miteinander verknüpft.

Durch die Anordnung der zur Potentialtrennung erforderlichen Transformatoren am Ausgang der Eingangsumrichtergruppen, können die Transformatoren mit einer Frequenz betrieben werden, die deutlich oberhalb der Netzfrequenz liegt und vorzugsweise zwischen 400 Hz und 1 kHz (Mittelfrequenzbereich) beträgt. Dies ermöglicht die Verwendung von Transformatoren mit niedrigem Gewicht, kleinem Volumen und besserem Wirkungsgrad.

Da alle an den Eingängen der Antriebsumrichter anliegenden Wechselspannungen über die Ausgleichsschaltung miteinander verschaltet sind, kann die Leistung zwischen unterschiedlichen Antriebsgruppen beliebig ausgetauscht werden. Dies ermöglicht eine in allen Belastungsfällen weitgehend gleichmäßige oder symmetrische Leistungsaufteilung auf alle Eingangsumrichtergruppen und damit auch eine symmetrische Spannungsaufteilung am Eingang der Eingangsumrichtergruppen. Dadurch ist sichergestellt, daß die an den Eingangsumrichtergruppen zulässige maximale Eingangsspannung auch bei Leistungsausfall eines Antriebsumrichters oder eines Antriebsmotors nicht überschritten wird.

Die Ausgleichsschaltung umfaßt für jeden eingangsseitig an sie angeschlossenen Antriebsumrichter ein Stellglied, wobei die Stellglieder der Ausgleichsschaltung ausgangsseitig parallel zueinander geschaltet sind und einen gemeinsamen sekundären Gleichspannungszwischenkreis speisen.

In einer weiteren vorteilhaften Ausgestaltung der Erfindung ist als Antriebsumrichter eine Direktumrichterschaltung, d.h. eine Umrichterschaltung ohne einen einen Energiespeicher enthaltenden Zwischenkreis, vorgesehen. Dies ist möglich, da durch die Ausgleichsschaltung stets eine weitgehend symmetrische Leistungsaufteilung auf die Eingangsumrichtergruppen auch ohne einen solchen Energiespeicher gewährleistet ist.

Insbesondere umfaßt jede Eingangsumrichtergruppe zumindest einen Eingangsumrichter, der einen Eingangsgleichrichter enthält, der über einen primären Gleichspannungszwischenkreis einen Wechselrichter speist, an dessen Ausgang eine rechteckförmige Wechselspannung erzeugt wird, deren Blockbreite und Periodendauer steuerbar ist. Durch Steuerung der Blockbreite kann die übertragene Blindleistung verringert werden.

Vorzugsweise sind als Eingangsgleichrichter und Wechselrichter jeweils Vierquadrantensteller in Zwei- oder Dreipunktschaltung mit abschaltbaren Halbleiterventilen vorgesehen.

Insbesondere ist in jeden primären Gleichspannungszwischenkreis zur Glättung der vom Netz eingespeisten pulsierenden Leistung ein Saugkreis geschaltet.

In einer weiteren bevorzugten Ausführungsform umfaßt jede Eingangsumrichtergruppe eine Mehrzahl von eingangsseitig in Reihe geschalteten Eingangsumrichtern, die jeweils ausgangsseitig elektrisch entkoppelt an die Primärseite einer Transformatorgruppe angeschlossen sind. Dadurch wird die von einer Eingangsumrichtergruppe maximal aufnehmbare Eingangsspannung vergrößert. Diese maximal aufnehmbare Eingangsspannung richtet sich nach der Sperrfähigkeit der einzelnen Halbleiterventile und damit nach der maximal möglichen Spannung im primären Gleichspannungszwischenkreis.

Die Transformatorgruppe enthält in einer vorteilhaften Ausführungsform eine der Anzahl der Eingangsumrichter entsprechende Anzahl von Transformatoren, insbesondere Zweiwicklungstransformatoren, die sekundärseitig parallel geschaltet sind. Dies ermöglicht ein modulares Aufbaukonzept mit entsprechenden Vorteilen in der Konstruktion, Fertigung und Wartung.

In einer alternativen Ausgestaltung der Erfindung umfaßt die Transformatorgruppe einen Mehrwicklungstransformator mit geteilten Sekundärwicklungen. Dies ermöglicht eine weitere Verringerung des Gewichts der Transformatorgruppe.

In einer weiteren Ausführungsform der Erfindung umfaßt der Antriebsumrichter für jede Phase einen in Mittelpunktschaltung aufgebauten Direktumrichterzweig, wobei insbesondere dem Direktumrichterzweig jeder Phase eine Mittelanzapfung einer Sekundärwicklung der Transformatorgruppe zugeordnet ist, die untereinander in Stern geschaltet sind. Dadurch ist gewährleistet, daß die motorfrequente Blindleistung des Antriebsmotors über den magnetischen Fluß des Transformators ausgeglichen und somit nicht in den primären Gleichspannungszwischenkreis des Eingangsumrichters übertragen wird.

In einer weiteren vorteilhaften Ausführungsform sind die Direktumrichter jeder Phase eingangsseitig parallel geschaltet. Auch durch diese Maßnahme ist gewährleistet, daß die Motorblindleistung ausgeglichen wird. Außerdem wird durch die Parallelschaltung der Sekundärseite der Transformatoren erreicht, daß sich die Last weitestgehend gleichmäßig auf die Eingangsumrichter aufteilt, d.h. eine symmetrische Leistungs- und Spannungsaufteilung auf die einzelnen Eingangsumrichter erfolgt.

Insbesondere ist in der Ausgleichsschaltung als Stellglied ein Vierquadrantensteller, vorzugsweise eine Zwei- oder Dreipunktschaltung, oder eine antiparallele Brückenschaltung oder eine Mittelpunktschaltung vorgesehen.

In einer weiteren vorteilhaften Ausgestaltung der Erfindung ist im sekundären Gleichspannungszwischenkreis der Ausgleichsschaltung ein Saugkreis angeordnet. In einem solchen Fall können die Saugkreise in den Eingangsumrichtern entfallen.

In einer weiteren Ausgestaltung der Erfindung ist an den sekundären Gleichspannungszwischenkreis der Ausgleichsschaltung ein zusätzlicher Eingangsumrichter einer Redundanzschaltung angeschlossen. Dadurch kann ohne großen Schaltungsaufwand der Ausfall eines Eingangsumrichters kompensiert werden.

Zur weiteren Erläuterung der Erfindung wird auf die Ausführungsbeispiele der Zeichnungen verwiesen, in deren
- FIG 1: eine Schaltungsanordnung gemäß der Erfindung in einem Blockschaltbild schematisch veranschaulicht ist. In
- FIG 2: ist das der Erfindung zugrundeliegende Schaltungsprinzip anhand von zwei in Reihe geschalteten Eingangsumrichtergruppen mit Redundanzschaltung näher dargestellt.
- FIG 3,4: zeigen bevorzugte Ausführungsbeispiele für die in der Eingangsumrichtergruppe verwendeten Eingangsgleichrichter.
- FIG 5,6: zeigen bevorzugte Ausführungsbeispiele für die in der Eingangsumrichtergruppe verwendeten Wechselrichter.
- FIG 7-10: zeigen vorteilhafte Ausführungsbeispiele für die in der Ausgleichsschaltung verwendeten Stellglieder.
- FIG 11,12: zeigen jeweils ein Ausführungsbeispiel für eine lastseitig verwendeten Antriebsumrichter und in
- FIG 13: ist anhand eines Diagramms, in dem die primärseitige Eingangsspannung am Transformator gegen die Zeit aufgetragen ist, die Steuerung der sekundärseitigen Eingangsspannung für den Antriebsumrichter veranschaulicht.

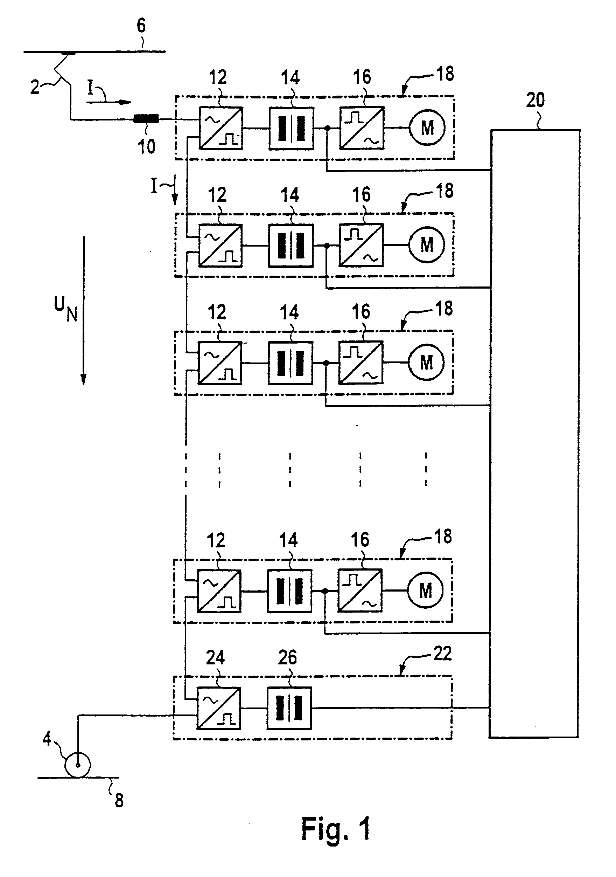

Gemäß FIG 1 wird die Schaltungsanordnung über einen Stromabnehmer 2 und einen Radsatz 4 zwischen einen eine Hochspannung U_{N} führenden Fahrdraht 6 und einer Fahrschiene 8 geschaltet. In Reihe mit einer Netzdrossel 10 und in Reihe zueinander sind eine Mehrzahl von Eingangsumrichtergruppen 12 geschaltet, die jeweils ausgangsseitig an die Primärseiten einer Transformatorgruppe 14 angeschlossen sind. Mit Hilfe der Eingangsumrichtergruppe 12 wird die niederfrequente Hochspannung U_{N} in eine mittelfrequente rechteckimpulsförmige bzw. blockförmige Wechselspannung U1 umgewandelt.

Jede Transformatorgruppe 14 speist über einen Antriebsumrichter, vorzugsweise eine Direktumrichterschaltung 16, zumindest einen Antriebsmotor M. Eingangsumrichtergruppe 12, Transformatorgruppe 14, Direktumrichterschaltung 16 und Antriebsmotor M bilden dabei jeweils eine Antriebsgruppe 18.

Die Sekundärseiten der Transformatorgruppen 14 sind an eine gemeinsame Ausgleichsschaltung 20 angeschlossen. Durch geeignete Steuerung der Ausgleichsschaltung 20 kann die von den Transformatorgruppen 14 jeweils übertragene Leistung unabhängig vom aktuellen Leistungsbedarf der Antriebsmotoren M so beeinflußt werden, daß diese für alle Antriebsgruppen 18 annähernd gleich ist. Damit ergibt sich eine gleichmäßige Aufteilung der Hochspannung U_{N} auf die in Reihe geschalteten Eingangsumrichtergruppen 12.

In der Figur sind nur vier Eingangsumrichtergruppen 12 dargestellt, deren tatsächliche Zahl sich nach der Anzahl der unabhängig zu speisenden Antriebsmotoren M richtet. Jede Eingangsumrichtergruppe 12 kann nun ihrerseits wiederum aus mehreren in Reihe geschalteten Eingangsumrichtern aufgebaut sein. Die Zahl der Eingangsumrichter richtet sich nach der Hochspannung U_{N}, so daß mit den derzeit verfügbaren Leistungshalbleitern mit einer Sperrfähigkeit von etwa 3,5 kV bei einer Hochspannung U_{N} von 15 kV etwa 16 in Reihe geschaltete Eingangsumrichter in Zweipunkttechnik erforderlich sind, die sich auf eine der Anzahl der Antriebsgruppen 18 entsprechende Anzahl von Eingangsumrichtergruppen 12 aufteilen.

An die Ausgleichsschaltung 20 ist außerdem eine Redundanzschaltung 22 angeschlossen, die einen Eingangsumrichter 24 umfaßt, der ebenfalls in Reihe zu den Eingangsumrichtergruppen 12 zwischen die Fahrschiene 8 und den Fahrdraht 6 geschaltet ist. Der Eingangsumrichter 24 dieser Redundanzschaltung 22 ist über einen Transformator 26 an die Ausgleichsschaltung 20 angeschlossen. Dem Eingangsumrichter 24 der Redundanzschaltung 22 ist kein Antriebsmotor unmittelbar zugeordnet, so daß dieser als Ersatz bei Ausfall einer der Eingangsumrichtergruppen 12 oder eines in diesen enthaltenen Eingangsumrichters über die Ausgleichsschaltung 20 zur Steuerung des vom Ausfall betroffenen Antriebsmotors M eingesetzt werden kann.

Mit der an die Ausgleichsschaltung 20 angeschlossenen Redundanzschaltung 22 können somit vollständig oder teilweise ausgefallene Eingangsumrichtergruppen 12 ersetzt werden. Dabei speist die Redundanzschaltung 22 die ausgefallene Eingangsstromrichterleistung über die Ausgleichsschaltung 20 in die entsprechende Antriebsgruppe 18 ein.

Im Normalbetrieb muß die Redundanzschaltung 22 nicht in Betrieb sein. Ihr Eingangsumrichter 24 kann in diesem Fall netzseitig kurzgeschlossen und ausgangsseitig von der Ausgleichsschaltung 20 getrennt werden.

Anstelle einer einzigen Redundanzschaltung 22 können auch mehrere Redundanzschaltungen 22 vorgesehen sein, um die Verfügbarkeit des Antriebs auch bei Ausfall mehrerer Eingangsumrichtergruppen 12 sicherzustellen.

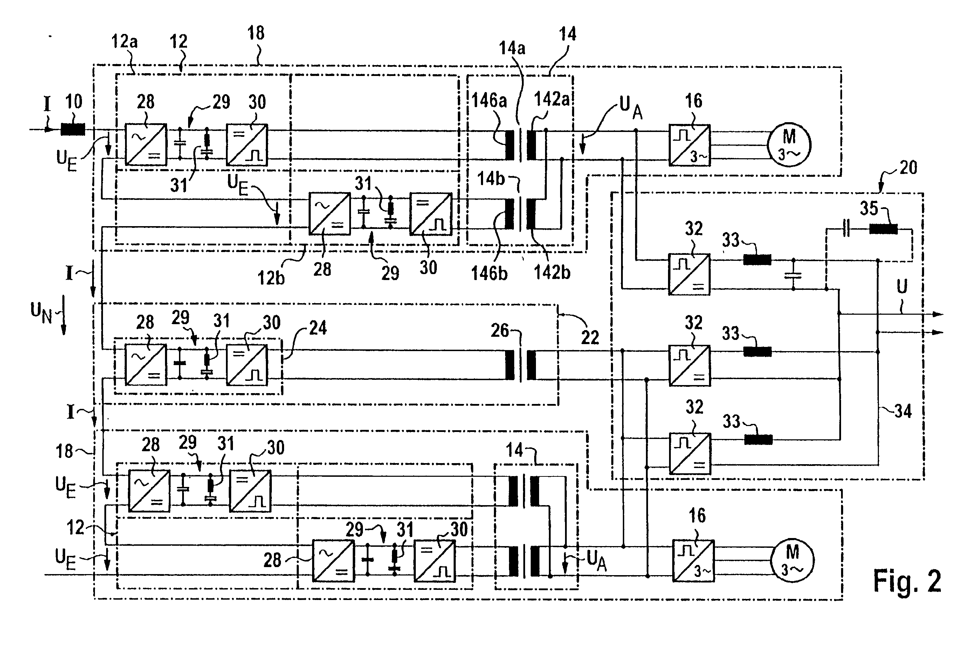

Gemäß FIG 2 wird die Schaltungsanordnung anhand von zwei Eingangsumrichtergruppen 12, die jeweils über eine Transformatorgruppe 14 und eine Direktumrichtergruppe 16 einen Antriebsmotor M speisen, näher erläutert. Jede Eingangsumrichtergruppe 12 umfaßt zwei Eingangsumrichter 12a und 12b, die jeweils ausgangsseitig an die Primärwicklung 146a,146b eines Transformators 14a bzw. 14b angeschlossen sind. Die Transformatorgruppe 14 enthält in diesem Ausführungsbeispiel somit zwei Transformatoren 14a,b (Zweiwicklungs-Transformatoren).

Die jeweils zugehörigen Sekundärwicklungen 142a und 142b sind parallel geschaltet und an den Eingang der Direktumrichterschaltung 16 angeschlossen. Die Direktumrichterschaltung 16 erzeugt ohne Energiezwischenspeicher aus einer Einphasenwechselspannung mit hoher Frequenz ein niederfrequentes Drehstromsystem mit variabler Frequenz und Grundschwingungsamplitude. Anstelle der in der Figur dargestellten zwei Eingangsumrichter 12a,12b je Eingangsumrichtergruppe 12 können auch ein oder mehr als zwei Eingangsumrichter vorgesehen sein, wobei dann jedem Eingangsumrichter ein Zweiwicklungstransformator zugeordnet ist.

Jeder Eingangsumrichter 12a und 12b enthält einen als Vierquadrantensteller ausgeführten Eingangsgleichrichter 28, der über einen primären Gleichspannungszwischenkreis 29 und einen Wechselrichter 30 mit dem Primärwicklungssystem 146a bzw. 146b des Transformators 14a bzw. 14b verbunden ist.

Jeder primäre Gleichspannungszwischenkreis 29 umfaßt einen Saugkreis 31, der zur Glättung der vom Eingangsgleichrichter 28 bereitgestellten pulsierenden Leistung und der damit verbundenen Spannungswelligkeit dient.

Sowohl bei dem Eingangsgleichrichter 28 als auch bei dem Wechselrichter 30 handelt es sich um Vierquadrantensteller, um auch beim Bremsen eine Rückspeisung der Leistung der Antriebsmotoren zu ermöglichen.

In der Ausgleichsschaltung 20 ist der Eingang einer jeden Direktumrichterschaltung 16 über ein steuerbares Stellglied 32 mit einem sekundären Gleichspannungszwischenkreis 34 gekoppelt. Jeder Direktumrichterschaltung 16 ist ein Stellglied 32 zugeordnet, wobei jedes Stellglied 32 ausgangsseitig über ein Filterelement 33, im Ausführungsbeispiel eine Drossel, den sekundären Gleichspannungszwischenkreis 34 speist.

Durch die steuerbaren Stellglieder 32 kann erreicht werden, daß die Eingangsspannungen U_{A} der Direktumrichterschaltungen 16 unabhängig vom unterschiedlichen Leistungsbedarf der Antriebsmotoren M annähernd gleich sind. Da der durch die Eingangsumrichter 12a, 12b und 24 fließende Strom I gleich ist, kann die von den Eingangsumrichtern 12a, 12b übertragene Leistung nur durch die Eingangsspannung U_{E} an den Eingangsumrichtern 12a, 12b gestellt werden. Um eine Leistungssymmetrierung für alle Eingangsumrichter 12a, 12b zu erreichen, wird deshalb über die Stellglieder 32 der Ausgleichsschaltung 20 die Phasenlage und die Amplitude des sekundärseitig fließenden Stromes I_{A} so gesteuert, daß die Transformatorgruppen 14 aller Antriebsgruppen 18 annähernd die gleiche Leistung übertragen. Dadurch ist sichergestellt, daß die gesamte Netzspannung U_{N} gleichmäßig auf alle Eingangsumrichter 12a, 12b aufgeteilt wird.

Ohne das Vorhandensein der Ausgleichsschaltung 20 würde beispielsweise der Leerlauf eines der beiden Antriebsmotoren M bewirken, daß nahezu die gesamte Netzspannung U_{N} an den Eingangsumrichtern 12a, 12b einer einzigen Eingangsumrichtergruppe 12 anfallen würde. Dies hätte zur Folge, daß entweder die Eingangsumrichter 12a, 12b entsprechend dimensioniert werden müssen oder aber die Anzahl der Eingangsumrichter entsprechend erhöht werden muß, um solche unsymmetrischen Belastungen verarbeiten zu können. Für ein übliches Netz mit einer Netzspannung von 15 kV und einer Frequenz von 16 2/3 Hz sind beispielsweise beim derzeitigen Stand der Technik etwa 16 Eingangsumrichter 12a, 12b in Zweipunkttechnik mit einer Halbleitersperrfähigkeit von 3,5 kV erforderlich. Durch die von der Ausgleichsschaltung 20 herbeigeführte Leistungssymmetrierung, d.h. die gleichmäßige Leistungsaufnahme aller Eingangsumrichter 12a, 12b der Eingangsumrichtergruppen 12 ist es somit nicht erforderlich, die Eingangsumrichtergruppen 12 für die Beherrschung extrem unterschiedlicher Belastungen der Antriebsgruppen 18 hinsichtlich der Zahl der Eingangsumrichter überzudimensionieren.

Der Eingangsumrichter 24 der Redundanzschaltung 22 ist im Normalfall so geschaltet, daß die an ihm abfallende Eingangsspannung gleich Null ist und er erst bei Ausfall einer der Eingangsumrichter 12a oder 12b in Betrieb genommen wird. Durch die Redundanzschaltung 22 kann aber auch die maximal mögliche Netzspannung U_{N} erhöht werden, wobei die von der Redundanzschaltung 22 übertragene Leistung beliebig auf die Antriebsgruppen 18 aufgeteilt werden kann.

Die Gleichspannung im sekundären Gleichspannungszwischenkreis 34 kann mit Hilfe der Stellglieder 32 variabel eingestellt werden. Dadurch ist auch eine mehrfach redundante Spannungsversorgung der Hilfsbetriebeeinrichtungen möglich, die bezogen auf Erdpotential außerdem bereits auf wesentlich niedrigerem Potential als die Netzspannung U_{N} liegt.

In einer alternativen Ausführungsform kann auch das in der Ausgleichsschaltung 20 der Redundanzschaltung 22 zugeordnete Stellglied 32 entfallen und dessen Funktion von einem der den Antriebsgruppen 18 zugeordneten Stellglieder 32 übernommen werden, wie dies in der Figur gestrichelt eingezeichnet ist.

In einer weiteren alternativen Ausgestaltung können die jeweils in die primären Gleichspannungszwischenkreise 29 geschalteten Saugkreise 31 entfallen, wenn anstelle dieser Saugkreise 31 ein einziger Saugkreis 35 im sekundären Gleichspannungszwischenkreis 34 angeordnet wird, wie dies in der Figur ebenfalls gestrichelt eingezeichnet ist.

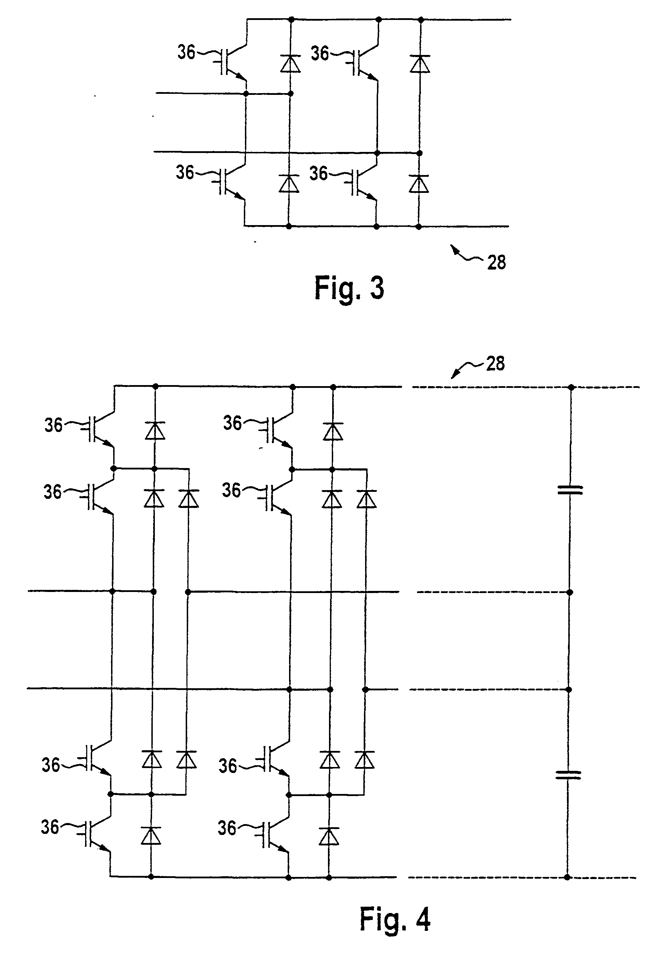

Gemäß FIG 3 ist als Eingangsgleichrichter 28 ein Vierquadrantensteller in Zweipunktschaltung mit IGBT's als abschaltbare Halbleiterventile 36 vorgesehen.

In einer alternativen Ausführungsform gemäß FIG 4 ist der Eingangsgleichrichter 28 als Vierquadrantensteller in Dreipunktschaltung ausgeführt, bei dem als abschaltbare Halbleiterventile 36 ebenfalls IGBT's vorgesehen sind.

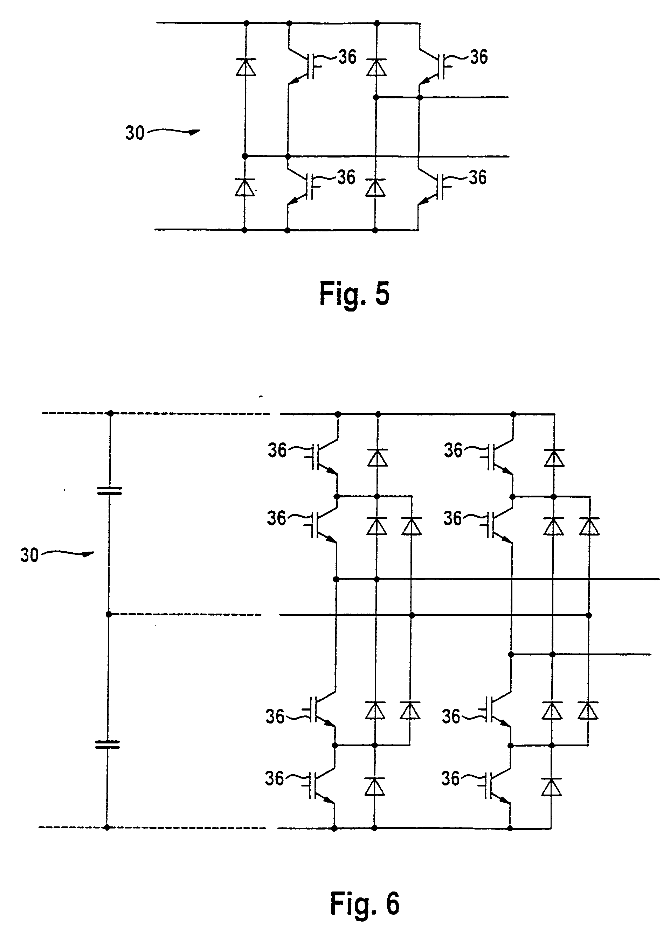

Gemäß FIG 5 ist als Wechselrichter 30 ein Vierquadrantensteller in Zweipunktschaltung mit IGBT's als abschaltbare Halbleiterventile 36 vorgesehen.

In einer alternativen Ausführungsform gemäß FIG 6 ist der Wechselrichter 30 als Vierquadrantensteller in Dreipunktschaltung ausgeführt, bei dem als abschaltbare Halbleiterventile 36 ebenfalls IGBT's vorgesehen sind.

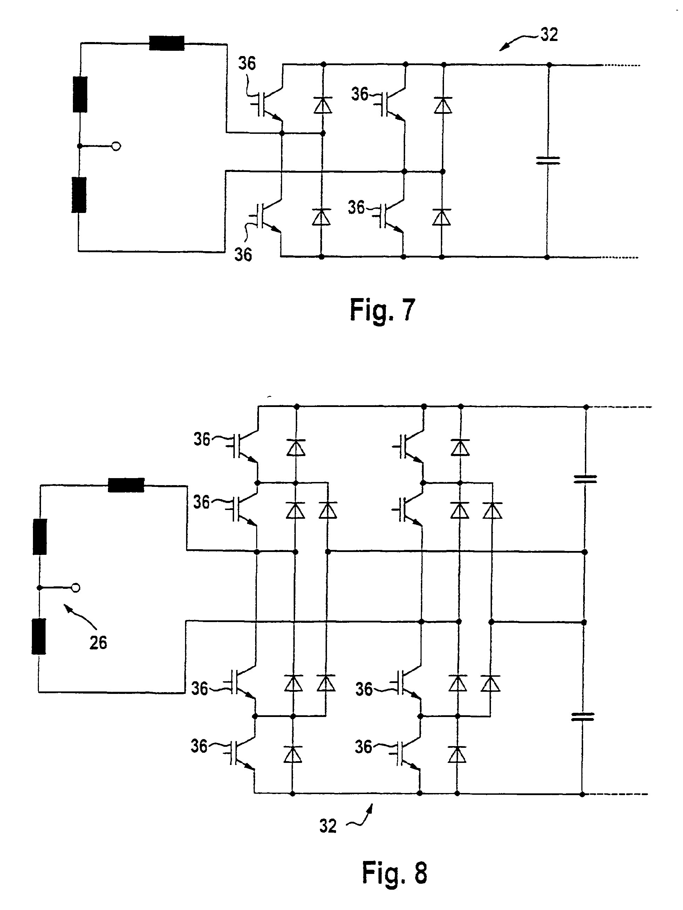

Gemäß FIG 7 ist als Stellglied 32 eine Zweipunktschaltung vorgesehen, bei der IGBT'S als abschaltbare Halbleiterventile 36 vorgesehen sind.

In einer alternativen Ausgestaltung gemäß FIG 8 ist als Stellglied 32 eine Dreipunktschaltung vorgesehen, bei der ebenfalls IGBT'S als abschaltbare Halbleiterventile 36 vorgesehen sind.

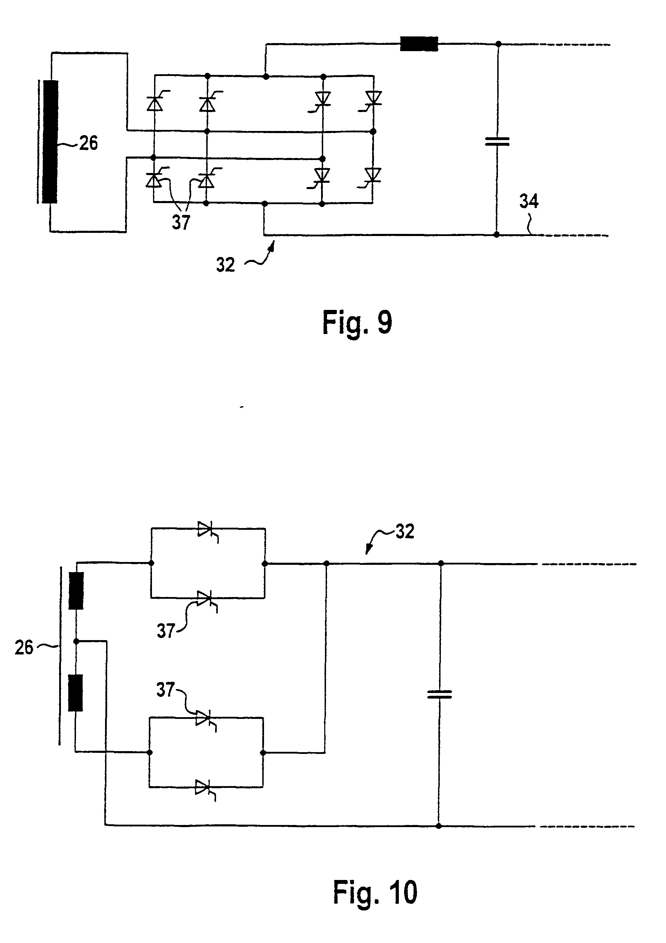

FIG 9 zeigt eine weitere Ausführungsform, bei der das Stellglied 32 als antiparallele Brückenschaltung ausgeführt ist, in der Thyristoren als nicht abschaltbare Halbleiterventile 37 verwendet werden.

Im Ausführungsbeispiel gemäß FIG 10 ist als Stellglied 32 eine mit Thyristoren als nicht abschaltbare Halbleiterventile 37 aufgebaute Mittelpunktschaltung vorgesehen.

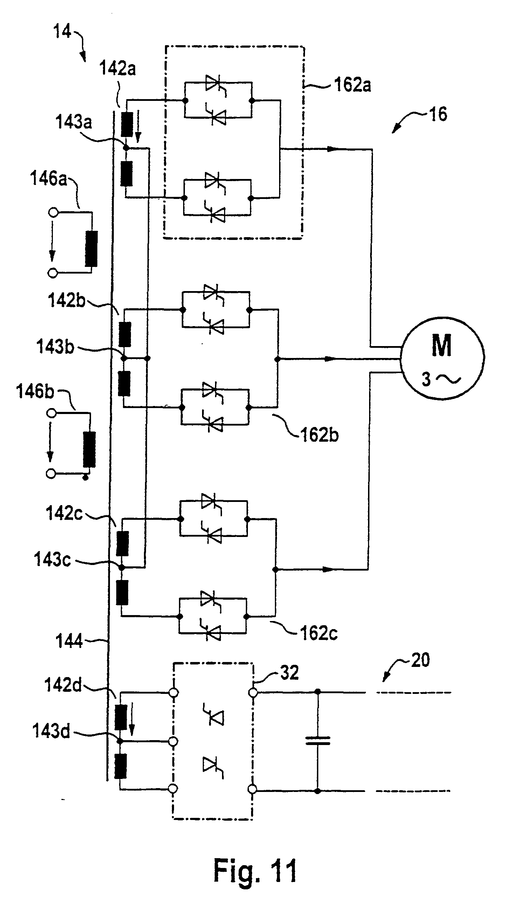

Gemäß FIG 11 ist die Umrichterschaltung 16 aus drei als Mittelpunktschaltungen ausgeführten Direktumrichterzweigen 162a-c aufgebaut, die ausgangsseitig ein Drehstromsystem mit variabler Frequenz und Amplitude erzeugen. Die Transformatorgruppe 14 weist hierzu einen Mehrwicklungstransformator 140 mit mehreren Sekundärwicklungen 142a-d auf, die jeweils mit einer Mittelanzapfung 143a-d versehen sind. Die Mittelanzapfungen 143a-c dreier Sekundärwicklungen 142a-c sind dabei in Stern geschaltet. In der Figur ist außerdem zu erkennen, daß die Transformatorgruppe 14 an einem gemeinsamen Kern 144 zwei voneinander getrennte Primärwicklungen 146a,b umfaßt. In diesem Ausführungsbeispiel enthält somit die Eingangsumrichtergruppe einer Antriebsgruppe ebenso wie im Ausführungsbeispiel nach FIG. 2 zwei Eingangsumrichter. Eine weitere Sekundärwicklung 143d ist an ein Stellglied 32 der Ausgleichsschaltung 20 angeschlossen. Der die Transformatorgruppe 14 bildende Mehrwicklungstransformator 140 enthält somit in diesem Ausführungsbeispiel zwei Primärwicklungen 146a,b und vier geteilte Sekundärwicklungen 142a-d, wobei die Anzahl der Primärwicklungen 146a,b der Anzahl der Eingangsumrichter 12a,b entspricht. In diesem Ausführungsbeispiel wird die motorfrequente Blindleistung im Magnetkreis der Transformatorgruppe 14 kompensiert.

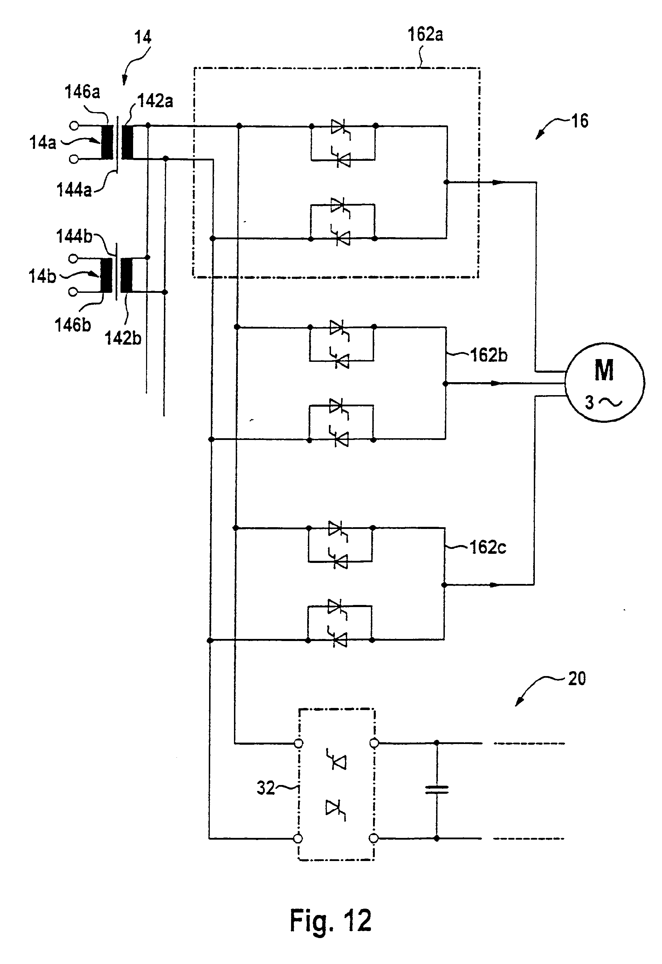

Gemäß FIG 12 sind die drei Direktumrichterzweige 162a-c eingangsseitig parallel geschaltet. Zusätzlich können die einzelnen Direktumrichterzweige 162a-c eingangsseitig mit in der Figur nicht dargestellten Induktivitäten untereinander entkoppelt werden. In diesem Ausführungsbeispiel umfaßt die Transformatorgruppe 14 zwei Zweiwicklungstransformatoren 14a,b mit jeweils getrennten Kernen 144a,b, deren Sekundärwicklungen 142a,b ausgangsseitig parallel geschaltet sind. In diesem Ausführungsbeispiel sind somit in einer Eingangsumrichtergruppe zwei Eingangsumrichter vorgesehen, denen jeweils eine Primärwicklung 146a bzw. b zugeordnet ist. Das Stellglied 32 der Ausgleichsschaltung 20 ist in diesem Fall ebenfalls parallel zu den einzelnen Phasen der Direktumrichterschaltung 16 geschaltet.

Zur weiteren Gewichtsverringerung kann es außerdem vorteilhaft sein, wenn die Primär- und Sekundärwicklungen 146a,b bzw. 142a,b auf einem gemeinsamen Kern angeordnet sind.

Durch den Aufbau der Direktumrichterschaltung gemäß Figuren 11 oder 12 wird ermöglicht, daß die motorfrequente Blindleistung zwischen den einzelnen Phasen des Direktumrichters ausgeglichen wird und sich nicht in die Eingangsumrichter überträgt, wo sie in den primären Gleichspannungszwischenkreisen der Eingangsumrichter zu einem Anstieg der Spannungs- und Stromwelligkeit führen würde.

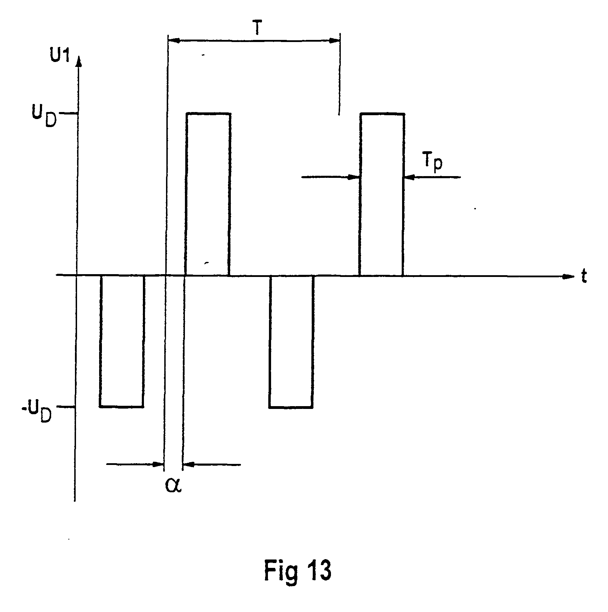

Die in Figuren 11 und 12 dargestellten Direktumrichterschaltungen 16 sind vorzugsweise aus netzgeführten Direktumrichterzweigen 162a-c aufgebaut. Hierdurch ergibt sich das Problem, daß über die Transformatoren 14 sowohl im Nennbetrieb als auch im Teillastbetrieb sehr viel mittelfrequente Blindleistung übertragen wird. Diese würde sich mit einer entsprechenden Welligkeit im primären Gleichspannungszwischenkreis der Eingangsumrichter äußern. Um die im Nennbetrieb als auch im Teillastbetrieb übertragene Blindleistung und die damit verbundene Wirkleistung im Zwischenkreis der Eingangsumrichter zu verringern, kann gemäß FIG 13 durch geeignete Wahl des Steuerwinkels α der Anschnittsteuerung des Wechselumrichters die Blockbreite Tₚ der Eingangsspannung U1 am Transformator an die Amplitude der Ausgangsspannung angepaßt werden. Die Höhe der Impulsblöcke ist dabei begrenzt auf die Gleichspannung U_{D} im primären Gleichspannungszwischenkreis der Eingangsumrichter.

Alternativ zur vorstehend erläuterten Blocktaktung kann auch eine Pulsbreitenmodulation vorgesehen sein, bei der die Taktfrequenz größer ist als die Transformationsfrequenz.

Durch die Verringerung der Blindleistung wird die Transformatorscheinleistung verringert. Außerdem verringert sich die Welligkeit im primären Gleichspannungszwischenkreis der Eingangsumrichter. Es treten auch geringere Netzoberschwingungen und im gesamten Antriebssystem geringere Spitzenströme im Drehstromantrieb auf. Dies führt insgesamt zu einer Verringerung der Verluste sowohl in den verwendeten Halbleiterventilen als auch im Transformator, wobei sowohl eine Übersteuerung des Kernmaterials des Transformators vermieden als auch die Verluste im Transformatorkern bei Teilaussteuerung verringert werden. Außerdem können die Verluste im Wechselrichter des Eingangsumrichters deutlich reduziert werden.

## Patentansprüche

1. Elektrische Schaltungsanordnung zum Versorgen eines elektrischen Antriebssystems, insbesondere eines elektrischen Antriebssystems eines schienengebundenen Triebfahrzeugs, mit einer Mehrzahl von Antriebsgruppen (18), von denen jede zumindest einen Antriebsmotor (M) und eine Eingangsumrichtergruppe (12) umfasst, und die elektrisch in Reihe zueinander an ein Versorgungsnetz (U_{N}) angeschlossen sind, wobei die Eingangsumrichtergruppen (12) jeweils ausgangsseitig an die Primärseiten einer Transformatorgruppe (14) angeschlossen sind, die mit ihrer Sekundärseite über einen Antriebsumrichter den Antriebsmotor (M) der Antriebsgruppe (18) speist, **dadurch gekennzeichnet, dass** eine Ausgleichsschaltung (20) zum Herbeiführen einer gleichmäßigen Lastaufteilung auf die Eingangsumrichtergruppen (12) die Eingangsseiten der Antriebsumrichter miteinander elektrisch verknüpft und für jeden eingangsseitig an sie angeschlossenen Antriebsumrichter ein Stellglied (32) umfasst und dass die Stellglieder (32) ausgangsseitig parallel zueinander einen gemeinsamen sekundären Gleichspannungszwischenkreis (34) speisen.

2. Elektrische Schaltungsanordnung nach Anspruch 1, bei der als Antriebsumrichter eine Direktumrichterschaltung (16) vorgesehen ist.

3. Elektrische Schaltungsanordnung nach einem der vorhergehenden Ansprüche, bei der jede Eingangsumrichtergruppe (12) zumindest einen Eingangsumrichter (12a,12b,24) enthält, der einen Eingangsgleichrichter (28) umfasst, der über einen primären Gleichspannungszwischenkreis (29) einen Wechselrichter (30) speist, an dessen Ausgang eine rechteckförmige Wechselspannung (U1) ansteht, deren Blockbreite (Tₚ) und Periodendauer (T) steuerbar ist.

4. Elektrische Schaltungsanordnung nach Anspruch 3, bei der als Eingangsgleichrichter (28) ein Vierquadrantensteller in Zweipunktschaltung mit abschaltbaren Halbleiterventilen (36) vorgesehen ist.

5. Elektrische Schaltungsanordnung nach Anspruch 3, bei der als Eingangsgleichrichter (28) ein Vierquadrantensteller in Dreipunktschaltung mit abschaltbaren Halbleiterventilen (36) vorgesehen ist.

6. Elektrische Schaltungsanordnung nach einem der Ansprüche 3 bis 5, bei der als Wechselrichter (30) ein Vierquadrantensteller in Zweipunktschaltung mit abschaltbaren Halbleiterventilen (36) vorgesehen ist.

7. Elektrische Schaltungsanordnung nach einem der Ansprüche 3 bis 5, bei der als Wechselrichter (30) ein Vierquadrantensteller in Dreipunktschaltung mit abschaltbaren Halbleiterventilen (36) vorgesehen ist.

8. Elektrische Schaltungsanordnung nach einem der Ansprüche 3 bis 7, mit einem in den primären Gleichspannungszwischenkreis (29) jeweils geschalteten Saugkreis (31).

9. Elektrische Schaltungsanordnung nach einem der vorgehenden Ansprüche, bei der jede Eingangsumrichtergruppe (12) eine Mehrzahl von eingangsseitig in Reihe geschalteten Eingangsumrichtern (12a,12b) umfasst, die jeweils ausgangsseitig elektrisch entkoppelt an eine Primärwicklung (146a,b) einer Transformatorgruppe (14) angeschlossen sind.

10. Elektrische Schaltungsanordnung nach Anspruch 9, bei der die Transformatorgruppe (14) eine der Anzahl der Eingangsumrichter (12a,b) entsprechende Anzahl von Transformatoren (14a,b-d) umfasst, die sekundärseitig parallel geschaltet sind.

11. Elektrische Schaltungsanordnung nach Anspruch 10, bei der als Transformatoren (14a,b) Zweiwicklungstransformatoren vorgesehen sind.

12. Elektrische Schaltungsanordnung nach Anspruch 9, bei der die Transformatorgruppe (14) einen Mehrwicklungstransformator (140) mit geteilten Sekundärwicklungen (142a-d) umfasst.

13. Elektrische Schaltungsanordnung nach einem der Ansprüche 1 bis 12, bei der die Direktumrichterschaltung (16) für jede Phase einen Direktumrichterzweig (162a-c) umfasst, der als Mittelpunktschaltung ausgeführt ist.

14. Elektrische Schaltungsanordnung nach Anspruch 13, bei der jedem Direktumrichterzweig (162a-c) eine geteilte Sekundärwicklung (142a-c) der Transformatorgruppe (14) zugeordnet ist, deren Mittelanzapfung (143a-c) in Stern geschaltet ist.

15. Elektrische Schaltungsanordnung nach Anspruch 13, bei der die Direktumrichterzweige (162a-c) eingangsseitig parallel geschaltet sind.

16. Elektrische Schaltungsanordnung nach einem der Ansprüche 1 bis 15, bei der in der Ausgleichsschaltung (20) als Stellglied (32) ein Vierquadrantensteller vorgesehen ist.

17. Elektrische Schaltungsanordnung nach Anspruch 16, bei der als Stellglied (32) ein Vierquadrantensteller in Zweipunktschaltung mit abschaltbaren Halbleiterventilen (36) vorgesehen ist.

18. Elektrische Schaltungsanordnung nach Anspruch 16, bei der als Stellglied (32) ein Vierquadrantensteller in Dreipunktschaltung mit abschaltbaren Halbleiterventilen (36) vorgesehen ist.

19. Elektrische Schaltungsanordnung nach einem der Ansprüche 1 bis 15, bei der in der Ausgleichsschaltung (20) als Stellglied (32) eine antiparallele Brückenschaltung vorgesehen ist.

20. Elektrische Schaltungsanordnung nach einem der Ansprüche 1 bis 15, bei der in der Ausgleichsschaltung (20) als Stellglied (32) eine Mittelpunktschaltung vorgesehen ist.

21. Elektrische Schaltungsanordnung nach einem der Ansprüche 1 bis 20, bei der im sekundären Gleichspannüngszwischenkreis (34) der Ausgleichsschaltung (20) ein Saugkreis (35) angeordnet ist.

22. Elektrische Schaltungsanordnung nach einem der vorhergehenden Ansprüche, bei der ein zusätzlicher Eingangsumrichter (24) einer Redundanzschaltung (22) an den sekundären Gleichspannungszwischenkreis (34) der Ausgleichsschaltung (20) angeschlossen ist.

## Claims

1. Electrical circuit arrangement for supplying an electrical drive system, in particular an electrical drive system of a rail prime mover vehicle, having a plurality of drive groups (18), each of which comprises at least one drive motor (M) and an input converter group (12), and which are electrically connected in series with one another to a supply network (U_{N}), with the input converter groups (12) each being connected on the output side to the primary sides of a transformer group (14), whose secondary side feeds the drive motor (M) in the drive group (18) via a drive converter, **characterized in that** an equalizing circuit (20) for unifying the load splitting between the input converter groups (12), electrically links the input sides of the drive converters to one another and has an actuating element (32) for each drive converter which is connected to it on the input side and **in that**, on the output side, the actuating elements (32) feed a common secondary DC voltage intermediate circuit (34), in parallel with one another.

2. Electrical circuit arrangement according to Claim 1, in which a direct converter circuit (16) is provided as the drive converter.

3. Electrical circuit arrangement according to one of the preceding claims, in which each input converter group (12) contains at least one input converter (12a, 12b, 24), which comprises an input rectifier (28), which feeds an inverter (30) via a primary DC voltage intermediate circuit (29), at the output of which inverter (30) a square-wave AC voltage (U1) is produced, whose block width (Tₚ) and period duration (T) are controllable.

4. Electrical circuit arrangement according to Claim 3, in which a four-quadrant controller in a two-point circuit with semiconductor valves (36) which can be turned off is provided as the input rectifier (28).

5. Electrical circuit arrangement according to Claim 3, in which a four-quadrant controller in a three-point circuit with semiconductor valves (36) which can be turned off is provided as the input rectifier (28).

6. Electrical circuit arrangement according to one of Claims 3 to 5, in which a four-quadrant controller in a two-point circuit with semiconductor valves (36) which can be turned off is provided as the inverter (30).

7. Electrical circuit arrangement according to one of Claims 3 to 5, in which a four-quadrant controller in a three-point circuit with semiconductor valves (36) which can be turned off is provided as the inverter (30).

8. Electrical circuit arrangement according to one of Claims 3 to 7, having a series resonant circuit (31) which is in each case connected in the primary DC voltage intermediate circuit (29).

9. Electrical circuit arrangement according to one of the preceding claims, in which each input converter group (12) comprises a plurality of input converters (12a,12b) which are connected in series on the input side and are each connected on the output side, in an electrically decoupled form, to a primary winding (146a, b) of a transformer group (14).

10. Electrical circuit arrangement according to Claim 9, in which the transformer group (14) comprises a number of transformers (14a, b-d) corresponding to the number of input converters (12a, b), and these transformers are connected in parallel on the secondary side.

11. Electrical circuit arrangement according to Claim 10, in which two-winding transformers are provided as the transformers (14a, b).

12. Electrical circuit arrangement according to Claim 9, in which the transform group (14) comprises a multiple-winding transformer (140) with split secondary windings (142a-d).

13. Electrical circuit arrangement according to one of Claims 1 to 12, in which the direct converter circuit (16) comprises a direct converter branch (162a-c) for each phase, which direct converter branch is in the form of a neutral-point circuit.

14. Electrical circuit arrangement according to Claim 13, in which each direct converter branch (162a-c) has an associated split secondary winding (142a-c) of the transformer group (14), whose centre tap (143a-c) is connected in star.

15. Electrical circuit arrangement according to Claim 13, in which the direct converter branches (162a-c) are connected in parallel on the input side.

16. Electrical circuit arrangement according to one of Claims 1 to 15, in which a four-quadrant controller is provided as an actuating element (32) in the equalizing circuit (20) .

17. Electrical circuit arrangement according to Claim 16, in which a four-quadrant controller in a two-point circuit with semiconductor valves (36) which can be turned off is provided as the actuating element (32).

18. Electrical circuit arrangement according to Claim 16, in which a four-quadrant controller in a three-point circuit with semiconductor valves (36) which can be turned off is provided as the actuating element (32).

19. Electrical circuit arrangement according to one of Claims 1 to 15, in which a back-to-back parallel-connected bridge circuit is provided as the actuating element (32) in the equalizing circuit (20).

20. Electrical circuit arrangement according to one of Claims 1 to 15, in which a neutral-point circuit is provided as the actuating element (32) in the equalizing circuit (20).

21. Electrical circuit arrangement according to one of Claims 1 to 20, in which a series resonant circuit (35) is arranged in the secondary DC voltage intermediate circuit (34) of the equalizing circuit (20).

22. Electrical circuit arrangement according to one of the preceding claims, in which an additional input converter (24) of a redundant circuit (22) is connected to the secondary DC voltage intermediate circuit (34) of the equalizing circuit (20).

## Revendications

1. Circuit électrique d'alimentation d'un système électrique d'entraînement, notamment d'un système électrique d'entraînement d'un véhicule moteur ferroviaire, comprenant une multiplicité de groupes ( 18 ) d'entraînement dont chacun comprend au moins un moteur ( M ) d'entraînement et un groupe ( 12 ) convertisseur d'entrée et qui sont raccordés électriquement, en série les uns avec les autres, à un réseau ( U_{N} ) d'alimentation, les groupes ( 12 ) convertisseurs d'entrée étant raccordés respectivement du côté de la sortie au côté primaire d'un groupe ( 14 ) de transformateurs qui alimente par son côté secondaire le moteur ( M ) d'entraînement du groupe ( 18 ) d'entraînement par un convertisseur d'entraînement, **caractérisé en qu'**un circuit ( 20 ) de compensation, pour provoquer une répartition uniforme de la charge sur les groupes ( 12 ) convertisseurs d'entrée, combine électriquement entre eux les côtés d'entrée des convertisseurs d'entraînement et comprend un élément ( 32 ) d'actionnement pour chaque convertisseur d'entraînement qui lui est raccordé du côté de l'entrée et en ce que les éléments ( 32 ) de réglage alimentent du côté de la sortie parallèlement entre eux un circuit ( 34 ) intermédiaire secondaire commun en tension continue.

2. Circuit électrique suivant la revendication 1, dans lequel il est prévu, comme convertisseur d'entraînement, un circuit ( 16 ) de convertisseur direct.

3. Circuit électrique suivant les revendications précédentes, dans lequel chaque groupe ( 12 ) de convertisseur d'entrée comporte au moins un convertisseur ( 12a, 12b, 24 ) d'entrée, qui comprend un redresseur ( 28 ) d'entrée qui alimente, par un circuit ( 29 ) intermédiaire en tension continue primaire, un onduleur ( 30 ) à la sortie duquel s'applique une tension ( U1 ) alternative rectangulaire, dont la largeur ( Tₚ ) de bloc et la durée ( T ) de la période peuvent être commandées.

4. Circuit électrique suivant la revendication 3, dans lequel il est prévu, comme redresseur ( 28 ) d'entrée, un régulateur à quatre cadrans en circuit par tout ou rien ayant des soupapes ( 36 ) à semi-conducteurs pouvant être mises hors circuit.

5. Circuit électrique suivant l'une des revendications 3 à 5, dans lequel il est prévu, comme redresseur ( 28 ) d'entrée, un régulateur à quatre cadrans en circuit à trois paliers ayant des soupapes ( 36 ) à semi-conducteurs pouvant être mises hors circuit.

6. Circuit électrique suivant l'une des revendications 3 à 5, dans lequel il est prévu, comme onduleur ( 30 ), un régulateur à quatre cadrans en circuit à trois paliers ayant des soupapes ( 36 ) à semi-conducteurs pouvant être mises hors circuit.

7. Circuit électrique suivant la revendication 3, dans lequel il est prévu, comme onduleur ( 30 ), un régulateur à quatre cadrans en circuit à trois paliers ayant des soupapes ( 36 ) à semi-conducteurs pouvant être mises hors circuit.

8. Circuit électrique suivant l'une des revendications 3 à 7 comprenant un circuit ( 31 ) d'absorption monté respectivement dans le circuit ( 29 ) intermédiaire primaire en tension continue.

9. Circuit électrique suivant l'une des revendications précédentes, dans lequel chaque groupe ( 12 ) convertisseur d'entrée comprend une multiplicité de convertisseurs ( 12a, 12b ) d'entrée montés en série du côté de l'entrée, qui sont raccordés en étant découplés respectivement électriquement du côté de la sortie à un enroulement ( 146a, b ) primaire d'un groupe ( 14 ) transformateur.

10. Circuit électrique suivant la revendication 10, dans lequel le groupe ( 14 ) transformateur comprend un nombre de transformateurs ( 14a, b à d ) correspondant au nombre des convertisseurs ( 12a, b ) d'entrée et montés en parallèle du côté secondaire.

11. Circuit électrique suivant la revendication 10, dans lequel il est prévu, comme transformateur ( 14a, b ), des transformateurs à deux enroulements.

12. Circuit électrique suivant la revendication 9, dans lequel le groupe ( 14 ) transformateur comprend un transformateur ( 140 ) à enroulements multiples ayant des enroulements ( 142a à d ) secondaires partagés.

13. Circuit électrique suivant l'une des revendications 1 à 12, dans lequel le circuit ( 16 ) convertisseur direct comprend pour chaque phase une branche ( 162a à c ) de convertisseurs directs qui est réalisée en circuit à prise médiane.

14. Circuit électrique suivant la revendication 13, dans lequel, à chaque branche ( 162a à c ) de convertisseurs directs, est associé un enroulement ( 142a à c ) secondaire partagé du groupe ( 14 ) transformateur, dont la prise ( 143a à c ) médiane est montée en étoile.

15. Circuit électrique suivant la revendication 13, dans lequel les branches ( 162a à c ) de convertisseurs directs sont montées en parallèle du côté de l'entrée.

16. Circuit électrique suivant l'une des revendications 1 à 15, dans lequel il est prévu dans le circuit ( 20 ) de compensation, comme élément ( 32 ) de réglage, un régulateur à quatre cadrans.

17. Circuit électrique suivant la revendication 16, dans lequel il est prévu, comme élément ( 32 ) de réglage, un régulateur à quatre cadrans en circuit par tout ou rien ayant des soupapes ( 36 ) à semi-conducteurs pouvant être mises hors circuit.

18. Circuit électrique suivant la revendication 16, dans lequel il est prévu, comme élément ( 32 ) de réglage, un régulateur à quatre cadrans en circuit à trois paliers ayant des soupapes ( 36 ) à semi-conducteurs pouvant être mises hors circuit.

19. Circuit électrique suivant l'une des revendications 1 à 15, dans lequel il est prévu dans le circuit ( 20 ) de compensation, un circuit en pont anti-parallèle comme élément ( 32 ) de réglage.

20. Circuit électrique suivant l'une des revendications 1 à 15, dans lequel il est prévu dans le circuit ( 20 ) de compensation, comme élément ( 32 ) de réglage, un circuit à prise médiane.

21. Circuit électrique suivant l'une des revendications 1 à 20, dans lequel un circuit ( 35 ) absorbant est monté dans le circuit ( 34 ) intermédiaire secondaire en tension continue du circuit ( 30 ) de compensation.

22. Circuit électrique suivant l'une des revendications précédentes, dans lequel un convertisseur ( 24 ) d'entrée supplémentaire d'un circuit ( 22 ) redondant est raccordé au circuit ( 34 ) intermédiaire secondaire en tension continue du circuit ( 20 ) de compensation.
